(19) Europäisches Patentamt
European Patent Office
Office européen des brevets

(11) **EP 1 231 457 B1**

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(51) Int Cl.:
*G01M 1/00* *(2006.01)*   *G01M 1/14* *(2006.01)*

(21) Anmeldenummer: **01128434.6**

(22) Anmeldetag: **05.12.2001**

(54) **Verfahren und Vorrichtung zum Kalibrieren einer Unwuchtmesseinrichtung**

Procedure and device for calibrating an arrangement for measuring unbalance

Procédé et dispositif de calibrage d'un dispositif de mesure de balourd

(84) Benannte Vertragsstaaten:
**AT BE CH CY DE DK ES FI FR GB GR IE IT LI LU MC NL PT SE TR**

(30) Priorität: **09.02.2001 DE 10105939**

(43) Veröffentlichungstag der Anmeldung:
**14.08.2002 Patentblatt 2002/33**

(73) Patentinhaber: **Snap-on Equipment GmbH 64319 Pfungstadt (DE)**

(72) Erfinder: **Goebel, Eickhart 64319 Pfungstadt (DE)**

(74) Vertreter: **Nöth, Heinz Patent Attorney, Arnulfstrasse 25 80335 München (DE)**

(56) Entgegenhaltungen:
**US-A- 4 494 400       US-A- 5 396 436
US-A- 5 421 199**

## Beschreibung

Die Erfindung betrifft ein Verfahren zum Kalibrieren einer Unwuchtmesseinrichtung nach dem Oberbegriff des Patentanspruches 1.

Ein derartiges Verfahren ist aus US 5,396,436 bekannt. Dabei werden zwei Kalibrierläufe durchgeführt, wobei im ersten Kalibrierlauf an der Messwelle der Radauswuchtmaschine in zwei unterschiedlichen Kalibrierebenen in einem bestimmten Abstand von der Messwellenachse zwei Kalibriergewichte mit bekannten Größen zum Umlauf gebracht werden. Anschließend wird an der Messwelle in einer Kalibrierebene ein Kalibriergewicht bekannter Größe befestigt und beim Kalibrierlauf ein daraus resultierendes statisches Kalibriersignal bestimmt. Anhand der Messergebnissen der beiden Kalibrierläufe wird eine Kompensation der Restunwucht der Messwelle durchgeführt.

Aus EP 0 133 229 B1 ist bekannt, zum Kalibrieren einer Auswuchtmaschine zunächst in einer ersten Kalibrierebene, welche sich in einer bestimmten axialen Lage zur Messachse senkrecht erstreckt, und in einem bestimmten radialen Abstand von der Messachse eine erste Kalibriermasse bekannter Größe anzuordnen und um die Messachse zudrehen. Ferner wird in einer zweiten Kalibrierebene mit einer zur ersten Kalibrierebene unterschiedlichen axialen Lage eine zweite Kalibriermasse bekannter Größe in einem bestimmten radialen Abstand um die Messachse gedreht. Während der beiden Kalibrierläufe werden die Kräfte gemessen, welche aus den von den Kalibriermassen erzeugten Unwuchten resultieren und für die Kalibrierung der Auswuchtmaschine ausgewertet. Dabei wird ein Vergleich der berechneten mit der aus der jeweiligen aus der Kalibriermasse sich ergebenden Unwucht durchgeführt und aus diesem Vergleich Korrekturfaktoren für die Kalibrierung der Auswuchtmaschine berechnet.

Die Anordnung der Kalibriermasse in der jeweiligen Kalibrierebene ist an die Anordnung und die Abmessungen eines realen Prüfrotors gebunden, an welchem in jedem Kalibrierlauf die jeweilige Kalibriermasse befestigt wird. Die Korrekturfaktoren für unterschiedliche axiale Positionierungen bzw. Abstände der Kalibrierebenen von den Messebenen, in denen die Messwertgeber zur Erfassung der Kräfte angeordnet sind, ändern sich nicht exakt linear, so dass die Extrapolation eines jeweiligen Korrekturfaktors auf die jeweilige Messebene, in welcher der Messgeber angeordnet ist, systembedingt fehlerbehaftet ist.

## [Aufgabe der Erfindung]

Aufgabe der Erfindung ist es, ein Verfahren der eingangs genannten Art zu schaffen, bei welchem im Hinblick auf system bedingte Abweichunge eine verbesserte Kalibrierung der Unwuchtmesseinrichtung erreicht wird.

Diese Aufgabe wird erfindungsgemäß durch die Merkmale des Patentanspruches 1 gelöst.

Bei der Erfindung werden in einem Kalibrierlauf zwei Kalibriermassen gleicher oder ungleicher Größe in zwei unterschiedlichen, einen axialen Abstand von einander aufweisenden Kalibrierebenen gleichzeitig zum Umlauf um die Messachse gebracht. Dabei wird in einer anderen Kalibrierebene eine um die Messachse umlaufende Kalibriermasse simuliert. Die beiden realen Kalibriermassen können in Form von Kalibriergewichten an einem Prüfrotor in zwei unterschiedlichen axialen Ebenen (Kalibrierebenen) befestigt sein. Der Prüfrotor ist ausgewuchtet und in bekannter Weise an einer Messwelle der Auswuchtmaschine befestigt.

Vorzugsweise sind die Kalibriermassen um 180° um die Messachse zueinander versetzt angeordnet und werden in diesen Positionen während des Kalibrierlaufes um die Messachse gedreht. Dabei werden die Kräfte gemessen, welche aus der Unwucht resultieren, die von der von den beiden Kalibriermassen simulierten Kalibriermasse erzeugt wird. Die Messwertgeber, welche die Kraftmessungen durchführen, können in herkömmlicher Weise in axialen Abständen an Messstellen der Messwelle angeordnet sein, wie es beispielsweise in der EP 0 133 299 gezeigt ist. Es ist jedoch auch möglich, die Messwertgeber im wesentlichen in einer einzigen zur Messwelle senkrechten Messebene anzuordnen und virtuelle Messstellen zu bilden, wie es beispielsweise aus der DE 198 44 975 A1 bekannt ist.

Die beiden Kalibriermassen können in gleichen oder unterschiedlichen Radien um die Messachse während des Kalibrierlaufes zum Umlauf gebracht werden. Wie schon erläutert, ergibt sich hieraus eine simulierte Kalibrierunwucht, welche aus den Positionen und den Größen der beiden gleichzeitig umlaufenden Kalibriermassen sich rechnerisch bestimmen lässt und vorzugsweise durch Vergleich in Beziehung gesetzt wird zu den von den Messgebern gemessenen Kräften. Hieraus ergeben sich dann unter Anwendung bekannter linearer Gleichungen für die Momente die für die Kalibrierung erforderlichen Korrekturgrößen.

Eine am ausgewuchteten Prüfrotor eventuell vorhandene geringe Restunwucht kann vor oder nach dem Kalibriermessvorgang gemessen und bei der Kalibrierung der Messeinrichtung kompensiert werden.

Durch entsprechende Wahl der Größe der beiden realen Kalibriermassen und/oder deren Positionen läßt sich eine Kalibriermasse bzw. Kalibrierunwucht für den jeweiligen Kalibrierlauf in einer jeweiligen virtuellen Kalibrierebene simulieren, die zu einer optimalen Feststellung des systematischen Fehlers der Messeinrichtung und damit zu einer optimierten Kalibrierung führt. Insbesondere ist die Erfindung von Vorteil bei Unwuchtmesseinrichtungen, bei denen der Bereich der realen Ausgleichsebenen außerhalb der realen oder virtuellen Messebenen sich befindet (fliegende Rotorlagerung)

Anhand der Figuren wird die Erfindung anhand eines Ausführungsbeispiels noch näher erläutert.

Es zeigt

Fig. 1 die Anordnung zweier Kalibriermassen bei einem ersten Kalibrierlauf; und

Fig. 2 die Anordnung zweier Kalibriermassen bei einem zweiten Kalibrierlauf.

In den beiden Figuren sind schematisch die wesentlichen Bestandteile einer Unwuchtmesseinrichtung beispielsweise einer Radauswuchtmaschine dargestellt. Diese beinhalten eine Messwelle 3, auf welche für die Unwuchtmessung ein zu messender Rotor mit Hilfe bekannter Aufspannmittel befestigt wird. Die Messwelle 3 ist um eine Messachse 2 drehbar und wird von einem nicht näher dargestellten Antrieb in bekannter Weise gedreht. Die Messwelle ist an zwei im axialen Abstand voneinander angeordneten Messwertgebern 10, 11 abgestützt. Von der Messwelle 3 während der Drehung ausgehende Kräfte werden von den Messwertgebern 10, 11 erfasst und in entsprechende elektrische Signale gewandelt, die zur Auswertung an eine nicht näher dargestellte Auswerteeinrichtung weitergeleitet werden.

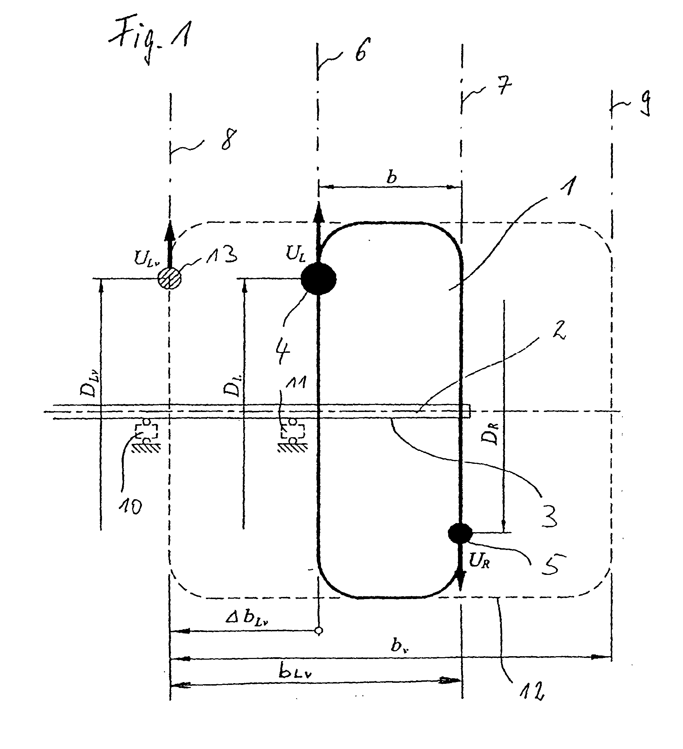

Für die jeweiligen Kalibrierläufe ist ein realer Prüfrotor 1, welcher ausgewuchtet ist, vorgesehen. Dieser Prüfrotor wird zum Kalibrieren der Unwuchtmesseinrichtung an der Messwelle 3 mit bekannten Spannmitteln befestigt und zentriert. Zur Simulierung einer bestimmten Kalibrierunwucht werden in realen Kalibrierebenen 6, 7 des Prüfrotors 1 eine erste und eine zweite Kalibriermasse 4, 5 in Form von Gewichten eingesetzt. Für den in Fig. 1 dargestellten Kalibrierlauf befindet sich in der ersten realen Kalibrierebene 6 die erste Kalibriermasse 4 mit der Größe $U_L$ [g]. Die zweite Kalibriermasse 5 befindet sich mit ihrer Größe $U_R$ [g] in der zweiten realen Kalibrierebene 7. Die beiden Kalibriermassen sind bezüglich der Messachse 2 um 180° zueinander versetzt am Prüfrotor 1 angeordnet.

Durch die beiden Kalibriermassen 4, 5 wird in einer ersten simulierten Kalibrierebene 8 (virtuelle Kalibrierebene) eine simulierte Kalibriermasse 13 (virtuelles Kalibriergewicht) mit der Größe $U_{Lv}$ [g] gebildet. Die erste Kalibriermasse 4 läuft bei dem in Fig. 1 dargestellten Kalibrierlauf um die Messachse 2 auf einen Kreis mit einem Durchmesser $D_L$ [mm] um. Die zweite Kalibriermasse 5 läuft um die Messachse 2 auf einem Kreis mit dem Durchmesser $D_R$ [mm] um. Die beiden Kalibrierebenen 6, 7 besitzen einen axialen Abstand b [mm] voneinander. Hieraus ergibt sich der Durchmesser für den Umlaufkreis der simulierten Kalibriermasse 13 mit $D_{Lv}$ [mm] . Wie aus der Fig. 1 zu ersehen ist, verschiebt sich die linke Kalibrierebene um den Betrag $\Delta b_{Lv}$ [mm] mit den dargestellten Größenverhältnissen in axialer Richtung nach links zur simulierten Kalibrierebene 8.

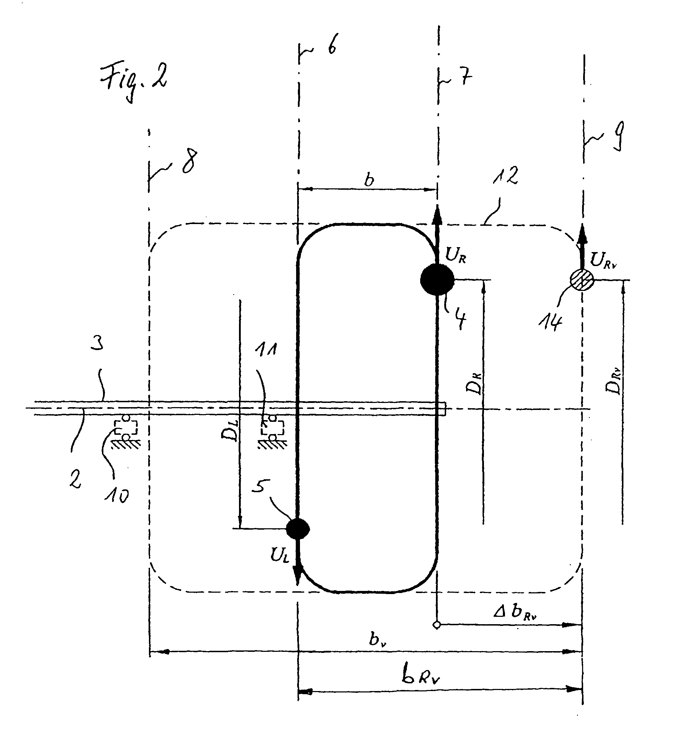

Bei der in der Fig. 2 dargestellten Anordnung der beiden Kalibriermassen 4, 5 ergibt sich eine zweite simulierte Kalibriermasse 14 in einer zweiten simulierten Kalibrierebene 9.

Hierzu ist die Kalibriermasse 4 mit der Größe $U_R$ [g] in der rechten realen Kalibrierebene 7 und die zweite Kalibriermasse 5 mit der Größe $U_L$ [g] in der linken realen Kalibrierebene 6 des realen Prüfrotors 1 angeordnet. Die Kalibriermasse 4 läuft auf einem Kreis mit dem Durchmesser $D_R$ [mm] und die Kalibriermasse 5 läuft auf einem Kreis mit dem Durchmesser $D_L$ [mm] um die Messachse 2 während des Kalibrierlaufs um. Die zweite simulierten Kalibriermasse 14 besitzt eine Größe $U_{Rv}$ [g]. Sie läuft auf einem Kreis mit dem Durchmesser $D_{Rv}$ [mm] um die Messachse 2 um. Die zweite simulierte Kalibrierebene 9 ist um eine axiale Strecke $\Delta b_{Rv}$ [mm] mit den dargestellten Größenverhältnissen gegenüber der realen rechten Kalibrierebene 7 nach rechts verschoben.

Bei der Durchführung der beiden in den Fig. 1 und 2 dargestellten Kalibrierläufe wird ein simulierter Prüfrotor 12, welcher mit strichlierten Linien in den Fig. 1 und 2 dargestellt ist, gebildet. Dieser besitzt die linke simulierte Kalibrierebene 8 und die rechte simulierte Kalibrierebene 9, in denen die beiden virtuellen Kalibriermassen 13, 14, welche jeweils von den beiden realen Kalibriermassen 4, 5 gebildet werden, simuliert sind.

Die relevanten Größen und Positionen der simulierten Kalibriermassen 13, 14 am simulierten Prüfrotor 12 ergeben sich nach folgenden Beziehungen. Die Größe der simulierten Kalibriermassen 13, 14 ergeben sich aus der Bedingung, dass die Summe aller Querkräfte zu Null wird. Für die beiden Kalibrierläufe in den Fig. 1 und 2 ergeben sich daraus die folgenden Beziehungen:

$$U_L \cdot D_L + (-U_R) \cdot D_R - U_{Lv} \cdot D_{Lv} = 0$$

und daraus $U_{Lv} = \dfrac{U_L \cdot D_L - U_R \cdot D_R}{D_{Lv}}$ für den Kalibrier-lauf der Fig. 1; und $U_{Rv} = \dfrac{U_L \cdot D_L - U_R \cdot D_R}{D_{Rv}}$ für den Kalibrier-lauf der Fig. 2; und

Die axialen Positionierungen der simulierten Kalibriermassen 13, 14 ergeben sich aus der Bedingung, dass die Summe der Momente zu Null wird.

Unter Berücksichtigung der unterschiedlichen Durchmesser der Umlaufbahnen der beiden Kalibriermassen ergibt sich für den Kalibrierlauf in Fig. 1:

$$U_L \cdot D_L \cdot b - U_{Lv} \cdot D_{Lv} \cdot b_{Lv} = 0$$

und daraus $\quad b_{Lv} = \dfrac{U_L \cdot D_L \cdot b}{U_{Lv} \cdot D_{Lv}} \quad$ und für den Kalibrierlauf in Fig. 2:

$$-U_R \cdot D_R \cdot b + U_{Rv} \cdot D_{Rv} \cdot b_{Rv} = 0$$

und daraus $\quad b_{Rv} = \dfrac{U_R \cdot D_R \cdot b}{U_{Rv} \cdot D_{Rv}}$

Die axialen Verlagerungen der linken simulierten Kalibrierebene 8 relativ zur realen linken Kalibrierebene 6 errechnet sich wie folgt:

$$\Delta b_{Lv} = \frac{-U_R \cdot D_R \cdot b}{U_{Lv} \cdot D_{Lv}} = b - b_{Lv}$$

Analog dazu ergibt sich die axiale Verlagerung der rechten simulierten Kalibrierebene 9 relativ zur realen rechten Kalibrierebene 7 wie folgt:

$$\Delta b_{Rv} = \frac{U_L \cdot D_L \cdot b}{U_{Rv} \cdot D_{Rv}} = b_{Rv} - b$$

Bei den beiden Kalibrierläufen der Fig. 1 und 2 ergibt sich eine Gesamtbreite dieses simulierten Prüfrotors 12 mit

$$b_v = b_{Lv} + b_{Rv} - b = b - \Delta b_{Lv} + \Delta b_{Rv} \,.$$

Durch entsprechende Wahl der Größen und Positionierungen der realen Kalibriermassen lassen sich simulierte Kalibriermassen bilden, welche beim jeweiligen Kalibrierlauf eine berechenbare Kalibrierunwucht erzeugen, mit welcher die aktuelle Messeinrichtung besser analysiert und Fehlerparameter an den günstigsten Positionen ermittelt werden. Hierdurch läßt sich ein an der Messeinrichtung eventuell vorhandendes systematisches Fehlverhalten feststellen und mit hoher Genauigkeit durch die Kalibrierung kompensieren. Insbesondere können die beiden Kalibriermassen bzw. Kalibrierunwuchten in den beiden Kalibrierebenen in gleichen Winkellagen angeordnet werden. Hierdurch werden Kalibrierunwuchten simuliert, die in Kalibrierebenen zwischen den beiden realen Kalibrierebenen 6, 7 liegen. Wenn die beiden Kalibriermassen die gleiche Grösse haben, läßt sich eine statische Kalibrierunwucht simulieren.

Ferner ist es möglich, eine simulierte Kalibrierunwucht mit einer in einer der beiden realen Kalibrierebenen 6, 7 angeordneten Kalibriermasse zu kombinieren. Hierzu wird dann ein zusätzlicher Kalibrierlauf mit nur einer Kalibriermasse in einer der beiden realen Kalibrierebenen durchgeführt.

**[Bezugszeichenliste]**

1 realer Prüfrotor
2 Messachse
3 Messwelle
4 erste Kalibriermasse
5 zweite Kalibriermasse
6 erste reale Kalibrierebene
7 zweite reale Kalibrierebene
8 erste simulierte Kalibrierebene
9 zweite simulierte Kalibrierebene
10 erster Messwertgeber
11 zweiter Messwertgeber
12 simulierter Prüfrotor
13 erste simulierte Kalibriermasse
14 zweite simulierte Kalibriermasse

## Patentansprüche

1. Verfahren zum Kalibrieren einer Unwuchtmesseinrichtung, bei dem bestimmte Kalibriermassen in bestimmten axialen und radialen Positionen in wenigstens zwei Kalibrierläufen um eine Messachse zum Umlauf gebracht werden, wobei zwei Kalibriermassen in zwei realen axialen Ebenen gleichzeitig zum Umlauf gebracht werden, und dabei die Kräfte gemessen werden, welche aus den von den Kalibriermassen verursachten Unwuchten resultieren und bei dem die gemessenen Kräfte zur Kalibrierung der Unwuchtmesseinrichtung ausgewertet werden, **dadurch gekennzeichnet, dass** in wenigstens zwei aufeinanderfolgenden Kalibrierläufen jeweils in von den realen Ebenen unterschiedlichen axialen Ebenen umlaufende Kalibriermassen und daraus berechnete Unwuchten mit den in den beiden realen Ebenen jeweils vorgesehenen Kalibriermassen simuliert werden und die berechneten simulierten Unwuchten mit den in den Kalibrierläufen gemessenen Unwuchten für die Kalibrierung verglichen werden.

2. Verfahren nach Anspruch 1, **dadurch gekennzeichnet, dass** die Kalibriermassen an um 180° zueinander versetzten Winkellagen um die Messachse zum Umlauf gebracht werden.

3. Verfahren nach Anspruch 1, **dadurch gekennzeichnet, dass** die beiden Kalibriermassen in gleichen Winkellagen um die Messachse zum Umlauf gebracht werden.

4. Verfahren nach einem der Ansprüche 1 bis 3, **dadurch gekennzeichnet, dass** die beiden Kalibriermassen in gleichen oder unterschiedlichen Radien um die Messachse zum Umlauf gebracht werden.

5. Verfahren nach einem der Ansprüche 1 bis 4, **dadurch gekennzeichnet, dass** zusätzlich wenigstens ein Kalibrierlauf mit nur einer Kalibriermasse in einer der beiden realen Kalibrierebenen durchgeführt wird.

6. Verfahren nach einem der Ansprüche 1 bis 5, **dadurch gekennzeichnet, dass** die beiden Kalibriermassen an einem ausgewuchteten Prüfrotor befestigt werden.

7. Verfahren nach Anspruch 6, **dadurch gekennzeichnet, dass** vor oder nach dem Kalibrierlauf bzw. den Kalibrierläufen die Restunwucht des Prüfrotors gemessen und bei der Kalibrierung der Messeinrichtung kompensiert wird.

## Claims

1. A method of calibrating an unbalance measuring apparatus in which given calibration masses are caused to rotate about a measuring axis in given axial and radial positions in at least two calibration runs, wherein two calibration masses are caused to rotate simultaneously in two real axial planes, and in that operation the forces which result from the unbalances caused by the calibration masses are measured, and in which the measured forces are evaluated for calibration of the unbalance measuring apparatus, **characterised in that** in at least two successive calibration runs calibration masses respectively rotating in axial planes different from the real planes and unbalances calculated therefrom are simulated with the calibration masses respectively provided in the two real planes and the calculated simulated unbalances are compared to the unbalances measured in the calibration runs for the calibration operation.

**2.** A method according to claim 1 **characterised in that** the calibration masses are caused to rotate about the measuring axis at angular positions which are displaced through 180° relative to each other.

**3.** A method according to claim 1 **characterised in that** the two calibration masses are caused to rotate about the measuring axis in identical angular positions.

**4.** A method according to one of claims 1 to 3 **characterised in that** the two calibration masses are caused to rotate about the measuring axis at identical or different radii.

**5.** A method according to one of claims 1 to 4 **characterised in that** in addition at least one calibration run is effected with only one calibration mass in one of the two real calibration planes.

**6.** A method according to one of claims 1 to 5 **characterised in that** the two calibration masses are fixed to a balanced test rotary member.

**7.** A method according to claim 6 **characterised in that** prior to or after the calibration run or runs the residual unbalance of the test rotary member is measured and compensated in calibration of the measuring apparatus.

**Revendications**

**1.** Procédé de calibrage d'un dispositif de mesure de balourd, dans lequel on met en rotation par rapport à un axe de mesure des masselottes de calibrage déterminées en des positions axiale et radiale déterminées dans au moins deux passes de calibrage, deux masselottes de calibrage étant mises simultanément en rotation dans deux plans axiaux réels, et ainsi sont mesurées les forces qui proviennent des balourds provoqués par les masselottes de calibrage et dans lequel on exploite les forces mesurées pour calibrer le dispositif de mesure de balourd, **caractérisé en ce que** l'on simule dans au moins deux passes de calibrage successives de masselottes de calibrage tournant dans des plans axiaux différents des plans réels et des balourds qui en sont calculés par les masselottes de calibrage prévues dans les deux plans réels et l'on compare pour le calibrage les masselottes simulées calculées aux balourds mesurés dans les passes de calibrage.

**2.** Procédé suivant la revendication 1, **caractérisé en ce que** l'on met en rotation par rapport à l'axe de mesure les masselottes de calibrage en des positions angulaires décalées l'une de l'autre de 180°.

**3.** Procédé suivant la revendication 1, **caractérisé en ce que** l'on met en rotation par rapport à l'axe de mesure les deux masselottes de calibrage en de mêmes positions angulaires.

**4.** Procédé suivant l'une des revendications 1 à 3, **caractérisé en ce que** l'on met en rotation par rapport à l'axe de mesure les deux masselottes de calibrage en des rayons qui sont les mêmes ou qui sont différents.

**5.** Procédé suivant l'une des revendications 1 à 4, **caractérisé en ce que** l'on effectue, en outre, au moins une passe de calibrage avec seulement une masselotte de calibrage dans l'un des deux plans de calibrage réels.

**6.** Procédé suivant l'une des revendications 1 à 5, **caractérisé en ce que** l'on fixe les deux masselottes de calibrage sur un rotor de contrôle des balourds.

**7.** Procédé suivant la revendication 6, **caractérisé en ce qu'**avant ou après la passe de calibrage ou les passes de calibrage, on mesure le balourd résiduel du rotor de contrôle et on le compense lors du calibrage du dispositif de mesure.

Fig. 1

Fig. 2